# EUROPEAN PATENT APPLICATION

(11) **EP 4 831 101 A1**
(43) Date of publication of application: **28.10.2026**
(21) Application number: 25827308.5
(22) Date of filing: 11.06.2025
(51) Int. Cl.: B65H 41/00, B65H 23/04, H01M 10/04

(54) **SEPARATOR RUNNING APPARATUS**

(30) Priority: 24.06.2024 KR 20240081939; 13.09.2024 KR 20240125991
(71) Applicant: LG Energy Solution, Ltd., Seoul 07335 (KR)
(72) Inventor: JANG, Chan Ho, Daejeon 34122 (KR); KIM, Jongcheon, Daejeon 34122 (KR); KIM, Yong Nam, Daejeon 34122 (KR); LEE, Yong Jun, Daejeon 34122 (KR); CHOI, Suho, Daejeon 34122 (KR)
(74) Representative: Plasseraud IP
(86) International application number: PCT/KR2025/007951
(87) International publication number: WO 2026/005343

(57) **Abstract**

The present invention provides a separator running apparatus including: a sheet roll of wound sheet of a separator having a first surface with a protective film made of synthetic resin material attached thereto; a separation roll separating continuously running sheet unwound from the sheet roll into the separator and the protective film; a recovery roll winding and recovering the protective film separated from the sheet passed the separation roll; and a nip roll supplying, to a stack table, the separator separated from the sheet passed through the separation roll, wherein a separation angle between the separator and the protective film is equal to or greater than 45 degrees.

## Description

### [TECHNICAL FIELD]

This application claims the benefit of priority based on Korean Patent Application No. 10-2024-0081939 filed on June 24, 2024 and Korean Patent Application No. 10-2024-0125991 filed on September 13, 2024, entire content disclosed in the document of the patent applications is included as a part of this specification.

The present invention relates to a separator running apparatus configured to separate a protective film attached to a separator sheet.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or a battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, high-capacity electrode assemblies of stack cell type are often manufactured at a high speed using the zigzag stacking method, which alternately stacks anodes and cathodes between each layer of a separator folded in a zigzag pattern.

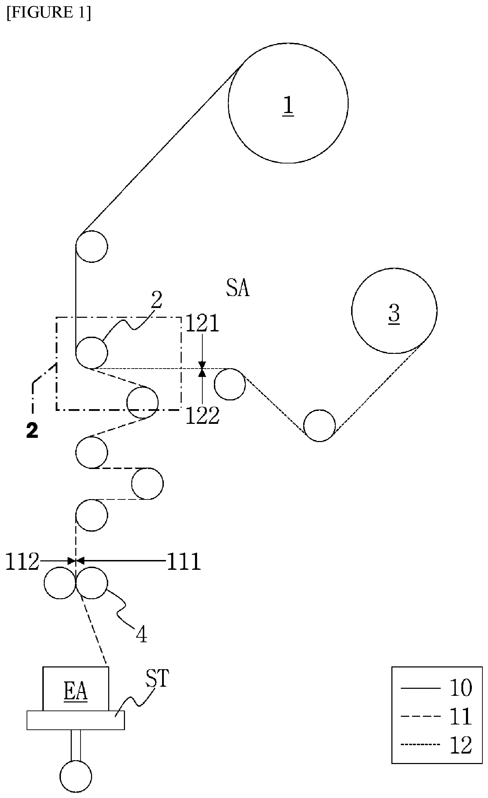

FIG. 1 illustrates a conventional separator running apparatus. Referring to FIG. 1, when manufacturing an electrode assembly using the zigzag stacking method, a separator 11, continuously supplied via a nip roll 4, is folded in a zigzag pattern on a stack table ST and stacked with an electrode to form an electrode assembly EA.

Here, the separator 11 is wound as a sheet 10 with a protective film 12 attached thereto, forming a sheet roll 1. As the separator 11 is unwound, the separator 11 passes through a separation roll 2 and is supplied to the stack table ST with the protective film 12 separated. Here, the separated protective film 12 is re-wound on a recovery roll 3 and recovered.

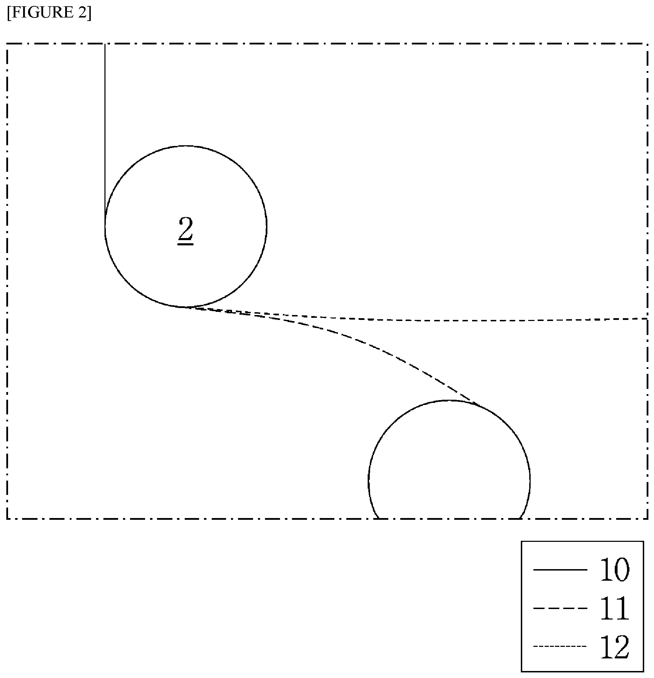

FIG. 2 is an enlarged view of the main portion of the conventional separator running apparatus of FIG. 1. Referring to FIG. 2, when the separator 11 and protective film 12 are separated, electrostatic attraction or adhesive force acts therebetween. Consequently, the separator 11 and protective film 12 cannot run in a straight line from the separation roll 2 to the next roller, resulting in the tension of the separator 11 and protective film 12 not being maintained constant.

To ensure normal supply of the separator 11 and recovery of the protective film 12, the tension applied to the separator 11 and protective film 12 must be maintained constant. Therefore, excessive attraction between the separator 11 and protective film 12 may destabilize the tension of the separator 11 and protective film 12, potentially causing defects in the supply of the separator 11 and recovery of the protective film 12.

### [DISCLOSURE]

### [TECHNICAL PROBLEM]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or a battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, high-capacity electrode assemblies of stack cell type are often manufactured at a high speed using the zigzag stacking method, which alternately stacks anodes and cathodes between each layer of a separator folded in a zigzag pattern.

FIG. 1 illustrates a conventional separator running apparatus. Referring to FIG. 1, when manufacturing an electrode assembly using the zigzag stacking method, a separator 11, continuously supplied via a nip roll 4, is folded in a zigzag pattern on a stack table ST and stacked with an electrode to form an electrode assembly EA.

Here, the separator 11 is wound as a sheet 10 with a protective film 12 attached thereto, forming a sheet roll 1. As the separator 11 is unwound, the separator 11 passes through a separation roll 2 and is supplied to the stack table ST with the protective film 12 separated. Here, the separated protective film 12 is re-wound on a recovery roll 3 and recovered.

FIG. 2 is an enlarged view of the main portion of the conventional separator running apparatus of FIG. 1. Referring to FIG. 2, when the separator 11 and protective film 12 are separated, electrostatic attraction or adhesive force acts therebetween. Consequently, the separator 11 and protective film 12 cannot run in a straight line from the separation roll 2 to the next roller, resulting in the tension of the separator 11 and protective film 12 not being maintained constant.

To ensure normal supply of the separator 11 and recovery of the protective film 12, the tension applied to the separator 11 and protective film 12 must be maintained constant. Therefore, excessive attraction between the separator 11 and protective film 12 may destabilize the tension of the separator 11 and protective film 12, potentially causing defects in the supply of the separator 11 and recovery of the protective film 12.

### [TECHNICAL SOLUTION]

In order to solve above-described problems, the present invention provides a structure of a separator running apparatus including: a sheet roll of wound sheet of a separator having a first surface with a protective film made of synthetic resin material attached thereto; a separation roll separating continuously running sheet unwound from the sheet roll into the separator and the protective film; a recovery roll winding and recovering the protective film separated from the sheet passed the separation roll; and a nip roll supplying, to a stack table, the separator separated from the sheet passed through the separation roll, wherein a separation angle between a second direction and a third direction is equal to or greater than 45 degrees, where a first direction is a running direction of the sheet immediately before passing the separation roll, the second direction is a running direction of the protective film immediately after passing through the separation roll, and the third direction is a running direction of the separator immediately after passing through the separation roll.

According to the present invention, when the separation angle is equal to or greater than 45 degrees, the separator and the protective film separated from the sheet may quickly move apart from each other, and the tension change and instability of each of the separator and the protective film due to the electrostatic attraction therebetween may be significantly reduced.

The sheet may be configured in a manner that the protective film is attached to the first surface of the separator. More specifically, the separator and the protective film are attached to each other by the second surface of the protective film being in contact with the first surface of the separator such that the second surface of the separator and the first surface of the protective film are the two surface of the sheet, respectively.

According to a first embodiment, the separation angle may be equal to or greater than 90 degrees. In such case, it has been confirmed that the tension change due to the electrostatic attraction between the separator and the protective film is negligibly small.

The protective film may pass through the first dancer roll between the separation roll and the recovery roll. Here, the first dancer roll moves in response to changes in tension applied to the protective film, acting as a damper to prevent abrupt changes in tension applied to the protective film or helping to maintain a tension applied to the protective film constant.

The separator may pass through the second dancer roll between the separation roll and the nip roll. Here, the second dancer roll moves in response to changes in tension applied to the separator, acting as a damper to prevent abrupt changes in tension applied to the separator or helping to maintain a tension applied to the separator constant.

According to a first embodiment, the separation roll may be arranged to be in contact with a first surface of the protective film. Here, the separation angle may be equal to or smaller than a first angle between the first direction and the second direction. That is, in such case, the separator and the protective film are separated from each other by the difference in the angle at which the separator and the protective film are bent with respect to the first direction as passes through the separation roll, and the difference in the angle may be the separation angle.

According to a first embodiment, the separation angle may be equal to the first angle. That is, since the protective film runs in a direction bent with respect to the first direction as passes through the separation roll, and the running direction of the separator is not bent as passes through the separation roll, the separation angle between the separator and the protective film is the angle at which the protective film is bent as passes through the separation roll.

According to a second embodiment, the direction of the second angle between the first direction and the third direction may be the same as that of the first angle. That is, the separator and the protective film may be bent in the same direction as passes through the separation roll. Here, the separation angle may be smaller than the first angle. Alternatively, the separation angle may be formed based on the difference between the first angle and the second angle.

In such case, unlike the case where the separator is not bent as passes through the separation roll, the tension of the separator may be more stable since both the separator and the protective film receive tension from the separation roll. That is, in this case, the support interval between the runs of the separator may be shortened such that sagging of the separator between supports is prevented.

According to one modified example, the separation structure of the separator and the protective film may also be applied even when the separator and the protective film receives actions from the separation roll in the opposite way.

For example, according to one modified example, the separation roll may be arranged to be in contact with a second surface of the separator. Here, the separation angle may be equal to or smaller than a third angle between the first direction and third direction. That is, in this case, the separator and the protective film are separated from each other by the difference in the angle at which the separator and the protective film are bent with respect to the first direction as passes through the separation roll, and the difference in the angle may be the separation angle.

Here, the separation angle may be equal to the third angle. That is, since the separator runs in a direction bent with respect to the first direction as passes through the separation roll, and the running direction of the protective film is not bent as passes through the separation roll, the separation angle between the separator and the protective film is the angle at which the separator is bent as passes through the separation roll.

Alternatively, the direction of the fourth angle between the first direction and the second direction may be the same as that of the third angle. That is, the separator and the protective film may be bent in the same direction as passes through the separation roll. Here, the separation angle may be smaller than the third angle. Alternatively, the separation angle may be formed based on the difference between the third angle and the fourth angle.

According to a third embodiment, the separation roll may include a first separation roll in contact with a first surface of the protective film and a second separation roll in contact with a second surface of the separator. That is, a pair of separation rolls in contact with both surfaces of the sheet, respectively, may be provided. Here, the first direction and the second direction form a fifth angle, and the first direction and the third direction form a sixth angle having a direction opposite to that of the fifth angle. In this case, the separator and the protective film may be bent in opposite directions as passes through the separation roll. Accordingly, the separation angle may be very large. For example, the separation angle may be up to 360 degrees.

In each embodiment of the present invention, the protective film passed through the separation roll may pass through a first angle adjustment roll.

The first angle adjustment roll may be arranged to be adjustable in the position thereof. Here, as the position of the first angle adjustment roll is adjusted, the second direction may be adjusted. Accordingly, the first angle adjustment roll may be used to adjust the separation angle.

Here, in order to adjust the separation angle more intuitively and accurately, the protective film preferably runs in a straight line between the separation roll and the first angle adjustment roll.

In each embodiment of the present invention, the separator passed through the separation roll may pass through a second angle adjustment roll.

The second angle adjustment roll may be arranged to be adjustable in the position thereof. Here, as the position of the second angle adjustment roll is adjusted, the third direction may be adjusted. Accordingly, the second angle adjustment roll may be used to adjust the separation angle.

Here, in order to adjust the separation angle more intuitively and accurately, the separator preferably runs in a straight line between the separation roll and the second angle adjustment roll.

The present invention also provides a separator running method including: a separation step of separating a continuously supplied sheet of a separator with a protective film attached thereto into the separator and the protective film, wherein a separation angle between a second direction and a third direction may be equal to or greater than 45 degrees, where a first direction may be a running direction of the sheet immediately before the separation step, the second direction may be a running direction of the protective film immediately after the separation step, and the third direction may be a running direction of the separator immediately after the separation step.

The separator running method may be performed using the separator running apparatus. However, it is not necessarily required.

According to the present invention, when the separation angle is equal to or greater than 45 degrees, the separator and the protective film separated from the sheet may quickly move apart from each other, and the tension change and instability of each of the separator and the protective film due to the electrostatic attraction therebetween may be significantly reduced.

According to the first embodiment, the separation angle may be equal to or greater than 90 degrees. In such case, it has been confirmed that the tension change due to the electrostatic attraction between the separator and the protective film is negligibly small.

According to the first embodiment, the separation angle may be equal to or smaller than the first angle between the first direction and the second direction. That is, in this case, the separator and the protective film are separated from each other by the difference in the angle at which the separator and the protective film are bent with respect to the first direction during the separation step, and the difference in the angle may be the separation angle.

According to the first embodiment, the separation angle may be equal to the first angle. That is, since the protective film runs in a direction bent with respect to the first direction during the separation step, and the running direction of the separator is not bent during the separation step, the separation angle between the separator and the protective film is the angle at which the protective film is bent.

According to the second embodiment, the direction of the second angle between the first direction and the third direction may be the same as that of the first angle. That is, the separator and the protective film may be bent in the same direction during the separation step. Here, the separation angle may be smaller than the first angle. Alternatively, the separation angle may be formed based on the difference between the first angle and the second angle.

In such case, unlike the case where the separator is not bent during the separation step, the tension of the separator may be more stable since both the separator and the protective film receive tension due to the bending. That is, in this case, the support interval between the runs of the separator may be shortened such that sagging of the separator between supports is prevented.

According to one modified example, the separation angle may be equal to or smaller than the first angle between the first direction and the third direction. That is, in this case, the separator and the protective film are separated from each other by the difference in the angle at which the separator and the protective film are bent with respect to the first direction during the separation step, and the difference in the angle may be the separation angle.

Here, the separation angle may be equal to the third angle. That is, since the separator runs in a direction bent with respect to the first direction during the separation step, and the running direction of the protective film is not bent during the separation step, the separation angle between the separator and the protective film is the angle at which the separator is bent during the separation step.

Alternatively, the direction of the fourth angle between the first direction and the second direction may be the same as that of the third angle. That is, the separator and the protective film may be bent in the same direction during the separation step. Here, the separation angle may be smaller than the third angle. Alternatively, the separation angle may be formed based on the difference between the third angle and the fourth angle.

According to the third embodiment, the first direction and the second direction form a fifth angle, and the first direction and the third direction form a sixth angle having a direction opposite to that of the fifth angle. In this case, the separator and the protective film may be bent in opposite directions during the separation step. Accordingly, the separation angle may be very large. For example, the separation angle may be up to 360 degrees.

### [ADVANTAGEOUS EFFECTS]

The present invention may provide separator running apparatus and method that prevents defects due to tension instability in the separator and protective film by significantly reducing the electrostatic attraction therebetween.

Another advantage of the present invention lies in providing separator running apparatus and method capable of controlling various variables related to tension changes in advance or in real time, depending on the material of the separator and protective film.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a conventional separator running apparatus.
FIG. 2 is an enlarged view of a main portion of the conventional separator running apparatus of FIG. 1.
FIG. 3 illustrates a separator running apparatus according to a first embodiment.
FIG. 4 illustrates a separator running apparatus according to a second embodiment.
FIG. 5 illustrates a separator running apparatus according to a third embodiment.
FIG. 6 illustrates a separator running method according to an embodiment of the present invention.

### [DESCRIPTION OF REFERENCE NUMERALS]

1: sheet roll
10: sheet
11: separator
111: first surface
112: second surface
12: protective film
121: first surface
122: second surface
2: separation roll
21: first separation roll
22: second separation roll
3: recovery roll
4: nip roll
51: first dancer roll
52: second dancer roll
61: first angle adjustment roll
62: second angle adjustment roll
EA: electrode assembly
ST: stack table
X1~3: first to third directions
SA: separation angle
A1~6: first to sixth angles

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

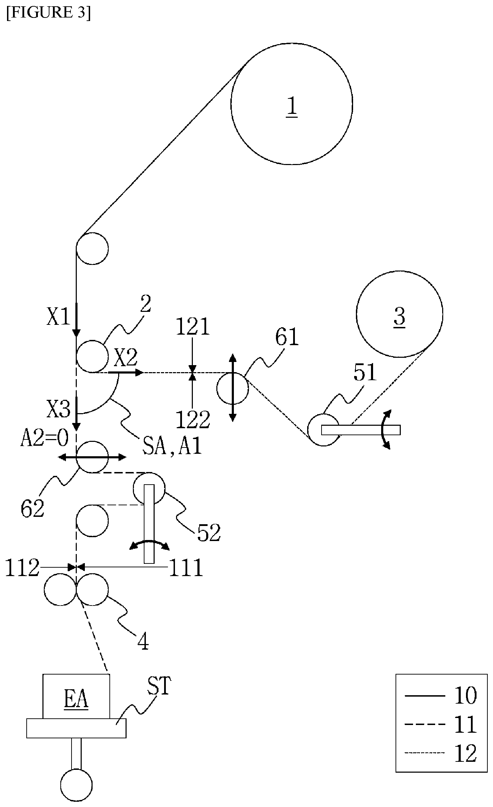

FIG. 3 illustrates a separator running apparatus according to a first embodiment. Referring to FIG. 3, the separator running apparatus includes a sheet roll 1 of wound sheet 10 of a separator 11 having a first surface 111 with a protective film 12 made of synthetic resin material attached thereto; a separation roll 2 separating continuously running sheet 10 unwound from the sheet 10 roll into the separator 11 and the protective film 12; a recovery roll 3 winding and recovering the protective film 12 separated from the sheet 10 passed the separation roll 2; and a nip roll 4 supplying, to a stack table, the separator 11 separated from the sheet 10 passed through the separation roll 2.

The sheet 10 may be configured in a manner that the protective film 12 is attached to the first surface 111 of the separator 11. More specifically, the separator 11 and the protective film 12 are attached to each other by the second surface 122 of the protective film 12 being in contact with the first surface 111 of the separator 11 such that the second surface 112 of the separator 11 and the first surface 121 of the protective film 12 are the two surface of the sheet 10, respectively.

Here, a first direction X1 is a running direction of the sheet immediately before passing the separation roll, the second direction X2 may be a running direction of the protective film immediately after passing through the separation roll, and the third direction X3 may be a running direction of the separator immediately after passing through the separation roll. According to the present invention, the separation angle SA between the second direction X2 and the third direction X3 is equal to or greater than 45 degrees.

According to the present invention, when the separation angle SA is equal to or greater than 45 degrees, the separator 11 and the protective film 12 separated from the sheet 10 may quickly move apart from each other, and the tension change and instability of each of the separator 11 and the protective film 12 due to the electrostatic attraction therebetween may be significantly reduced.

According to a first embodiment, the separation angle SA may be equal to or greater than 90 degrees. In such case, it has been confirmed that the tension change due to the electrostatic attraction between the separator 11 and the protective film 12 is negligibly small.

The protective film 12 may pass through the first dancer roll 51 between the separation roll 2 and the recovery roll 3. Here, the first dancer roll 51 moves in response to changes in tension applied to the protective film 12, acting as a damper to prevent abrupt changes in tension applied to the protective film 12 or helping to maintain a tension applied to the protective film 12 constant.

The separator 11 may pass through the second dancer roll 52 between the separation roll 2 and the nip roll 4. Here, the second dancer roll 52 moves in response to changes in tension applied to the separator 11, acting as a damper to prevent abrupt changes in tension applied to the separator 11 or helping to maintain a tension applied to the separator 11 constant.

According to the first embodiment, the separation roll 2 may be arranged to be in contact with a first surface of the protective film 12. Here, the separation angle SA may be equal to or smaller than a first angle A1 between the first direction X1 and the second direction X2. That is, in such case, the separator 11 and the protective film 12 are separated from each other by the difference in the angle at which the separator 11 and the protective film 12 are bent with respect to the first direction X1 as passes through the separation roll 2, and the difference in the angle may be the separation angle SA.

According to a first embodiment, the separation angle SA may be equal to the first angle A1. That is, since the protective film 12 runs in a direction bent with respect to the first direction as passes through the separation roll 2, and the running direction of the separator 11 is not bent as passes through the separation roll 2, the separation angle SA between the separator 11 and the protective film 12 is the angle at which the protective film 12 is bent as passes through the separation roll 2.

Hereinafter, parts not described separately regarding the second embodiment and the third embodiment may be the same as those in the first embodiment described above.

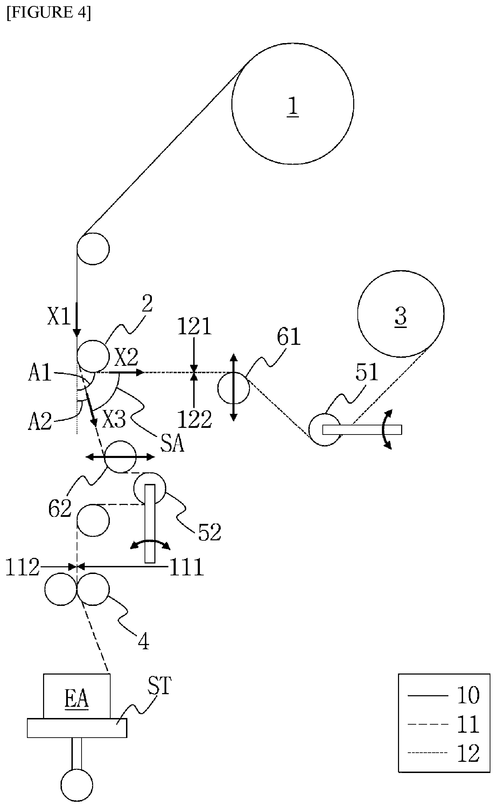

FIG. 4 illustrates a separator running apparatus according to a second embodiment. Referring to FIG. 4, in the separator running apparatus according to the second embodiment, the direction of the second angle A2 between the first direction X1 and the third direction X3 may be the same as that of the first angle A1. That is, the separator 11 and the protective film 12 may be bent in the same direction as passes through the separation roll 2. Here, the separation angle SA may be smaller than the first angle A1. Alternatively, the separation angle SA may be formed based on the difference between the first angle A1 and the second angle.

In such case, unlike the case where the separator 11 is not bent as passes through the separation roll 2, the tension of the separator 11 may be more stable since both the separator 11 and the protective film 12 receive tension from the separation roll 2. That is, in this case, the support interval between the runs of the separator 11 may be shortened such that sagging of the separator 11 between supports is prevented.

According to one modified example, the separation structure of the separator 11 and the protective film 12 may also be applied even when the separator 11 and the protective film 12 receives actions from the separation roll 2 in the opposite way.

For example, according to one modified example, the separation roll 2 may be arranged to be in contact with a second surface 112 of the separator 11. Here, the separation angle SA may be equal to or smaller than a third angle between the first direction X1 and third direction X3. That is, in this case, the separator 11 and the protective film 12 are separated from each other by the difference in the angle at which the separator 11 and the protective film 12 are bent with respect to the first direction as passes through the separation roll 2, and the difference in the angle may be the separation angle SA.

Here, the separation angle SA may be equal to the third angle. That is, since the separator 11 runs in a direction bent with respect to the first direction X1 as passes through the separation roll 2, and the running direction of the protective film 12 is not bent as passes through the separation roll 2, the separation angle SA between the separator 11 and the protective film 12 is the angle at which the separator 11 is bent as passes through the separation roll 2.

Alternatively, the direction of the fourth angle between the first direction X1 and the second direction X2 may be the same as that of the third angle. That is, the separator 11 and the protective film 12 may be bent in the same direction as passes through the separation roll 2. Here, the separation angle SA may be smaller than the third angle. Alternatively, the separation angle SA may be formed based on the difference between the third angle and the fourth angle.

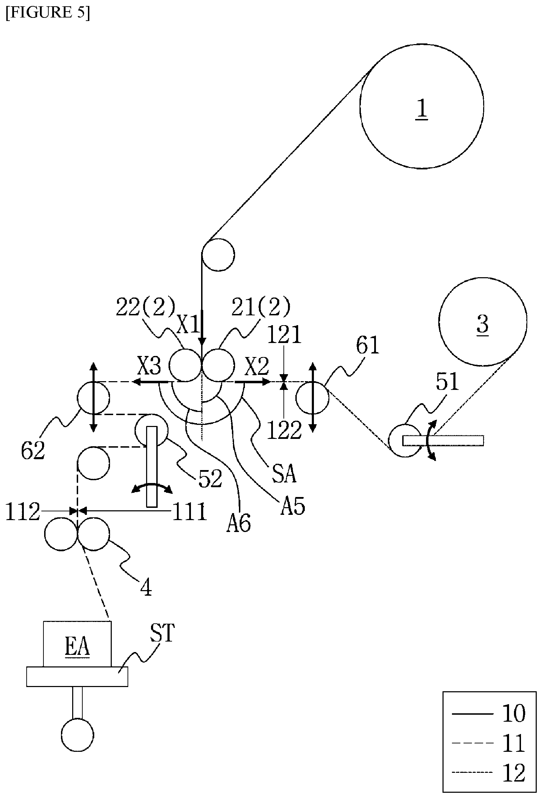

FIG. 5 illustrates a separator running apparatus according to a third embodiment. Referring to FIG. 5, in the separator running apparatus according to the third embodiment, the separation roll 2 may include a first separation roll 21 in contact with a first surface 121 of the protective film 12 and a second separation roll 22 in contact with a second surface 112 of the separator 11. That is, a pair of the separation rolls 2 in contact with both surfaces of the sheet 10, respectively, may be provided. Here, the first direction X1 and the second direction X2 may form a fifth angle A5, and the first direction X3 and the third direction X3 may form a sixth angle A6 having a direction opposite to that of the fifth angle A5. In this case, the separator 11 and the protective film 12 may be bent in opposite directions as passes through the separation roll 2. Accordingly, the separation angle SA may be very large. For example, the separation angle SA may be up to 360 degrees.

Referring to FIGS. 3 to 5 together, in each embodiment of the present invention, the protective film 12 passed through the separation roll 2 may pass through a first angle adjustment roll 61.

The first angle adjustment roll 61 may be arranged to be adjustable in the position thereof. Here, as the position of the first angle adjustment roll 61 is adjusted, the second direction X2 may be adjusted. Accordingly, the first angle adjustment roll 61 may be used to adjust the separation angle SA.

Here, in order to adjust the separation angle SA more intuitively and accurately, the protective film 12 preferably runs in a straight line between the separation roll 2 and the first angle adjustment roll 61.

In each embodiment of the present invention, the separator 11 passed through the separation roll 2 may pass through a second angle adjustment roll 62.

The second angle adjustment roll 62 may be arranged to be adjustable in the position thereof. Here, as the position of the second angle adjustment roll 62 is adjusted, the third direction X3 may be adjusted. Accordingly, the second angle adjustment roll 62 may be used to adjust the separation angle SA.

Here, in order to adjust the separation angle SA more intuitively and accurately, the separator 11 preferably runs in a straight line between the separation roll 2 and the second angle adjustment roll 62.

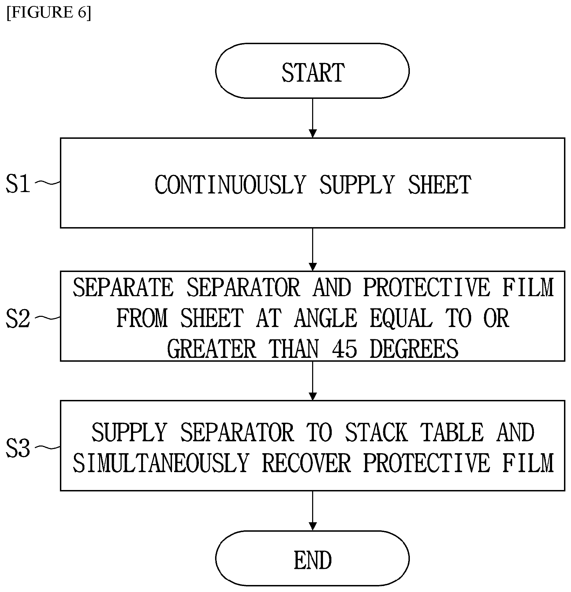

FIG. 6 illustrates a separator running method according to an embodiment of the present invention. The separator running method according to the embodiment of the present invention includes: a first supply stage S1 of continuously supplying a sheet; a separation step S2 of separating the sheet 10 into a separator 11 and a protective film 12; and a second supply step S3 of supplying the separator 11 to the stack table ST and simultaneously recovering the protective film 12.

Here, in the separation step S2, the separator and the protective film are separated by a predetermined separation angle. Specifically, the separation angle is the angle formed by a second direction and a third direction, and is equal to or greater than 45 degrees where a first direction is the running direction of the sheet before the separation step S2, the second direction is the running direction of the protective film immediately after the separation step S2, and the third direction is the running direction of the separator immediately after the separation step S2.

The separator running method may be performed using the separator running apparatus. However, it is not necessarily required.

According to the present invention, when the separation angle is equal to or greater than 45 degrees, the separator and the protective film separated from the sheet may quickly move apart from each other, and the tension change and instability of each of the separator and the protective film due to the electrostatic attraction therebetween may be significantly reduced.

According to the first embodiment, the separation angle may be equal to or greater than 90 degrees. In such case, it has been confirmed that the tension change due to the electrostatic attraction between the separator and the protective film is negligibly small.

According to the first embodiment, the separation angle may be equal to or smaller than the first angle between the first direction and the second direction. That is, in this case, the separator and the protective film are separated from each other by the difference in the angle at which the separator and the protective film are bent with respect to the first direction during the separation step, and the difference in the angle may be the separation angle.

According to the first embodiment, the separation angle may be equal to the first angle. That is, since the protective film runs in a direction bent with respect to the first direction during the separation step, and the running direction of the separator is not bent during the separation step, the separation angle between the separator and the protective film is the angle at which the protective film is bent.

According to the second embodiment, the direction of the second angle between the first direction and the third direction may be the same as that of the first angle. That is, the separator and the protective film may be bent in the same direction during the separation step. Here, the separation angle may be smaller than the first angle. Alternatively, the separation angle may be formed based on the difference between the first angle and the second angle.

In such case, unlike the case where the separator is not bent during the separation step, the tension of the separator may be more stable since both the separator and the protective film receive tension due to the bending. That is, in this case, the support interval between the runs of the separator may be shortened such that sagging of the separator between supports is prevented.

According to one modified example, the separation angle may be equal to or smaller than the first angle between the first direction and the third direction. That is, in this case, the separator and the protective film are separated from each other by the difference in the angle at which the separator and the protective film are bent with respect to the first direction during the separation step, and the difference in the angle may be the separation angle.

Here, the separation angle may be equal to the third angle. That is, since the separator runs in a direction bent with respect to the first direction during the separation step, and the running direction of the protective film is not bent during the separation step, the separation angle between the separator and the protective film is the angle at which the separator is bent during the separation step.

Alternatively, the direction of the fourth angle between the first direction and the second direction may be the same as that of the third angle. That is, the separator and the protective film may be bent in the same direction during the separation step. Here, the separation angle may be smaller than the third angle. Alternatively, the separation angle may be formed based on the difference between the third angle and the fourth angle.

According to the third embodiment, the first direction and the second direction form a fifth angle, and the first direction and the third direction form a sixth angle having a direction opposite to that of the fifth angle. In this case, the separator and the protective film may be bent in opposite directions during the separation step. Accordingly, the separation angle may be very large. For example, the separation angle may be up to 360 degrees.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A separator running apparatus comprising:
a sheet roll of wound sheet of a separator having a first surface with a protective film made of synthetic resin material attached thereto;
a separation roll separating continuously running sheet unwound from the sheet roll into the separator and the protective film;
a recovery roll winding and recovering the protective film separated from the sheet passed the separation roll; and
a nip roll supplying, to a stack table, the separator separated from the sheet passed through the separation roll,
wherein a separation angle between a second direction and a third direction is equal to or greater than 45 degrees,
where a first direction is a running direction of the sheet immediately before passing the separation roll,
the second direction is a running direction of the protective film immediately after passing through the separation roll, and
the third direction is a running direction of the separator immediately after passing through the separation roll.

2. The separator running apparatus of claim 1, wherein the separation angle is equal to or greater than 90 degrees.

3. The separator running apparatus of claim 1, wherein the protective film passes through a first dancer roll between the separation roll and the recovery roll.

4. The separator running apparatus of claim 1, wherein the separator passes through a second dancer roll between the separation roll and the nip roll.

5. The separator running apparatus of claim 1, wherein the separation roll is arranged to be in contact with a first surface of the protective film, and
the separation angle is equal to or smaller than a first angle between the first direction and the second direction.

6. The separator running apparatus of claim 5, wherein the separation angle is equal to the first angle.

7. The separator running apparatus of claim 5, wherein a direction of a second angle between the first direction and the third direction is same as that of the first angle, and
the separation angle is smaller than the first angle.

8. The separator running apparatus of claim 1, wherein the separation roll is arranged to be in contact with a second surface of the separator, and
the separation angle is equal to or smaller than a third angle between the first direction and the third direction.

9. The separator running apparatus of claim 8, wherein the separation angle is equal to the third angle.

10. The separator running apparatus of claim 8, wherein a direction of a fourth angle between the first direction and the second direction is same as that of the third angle, and
the separation angle is smaller than the third angle.

11. The separator running apparatus of claim 1, wherein the separation roll comprises a first separation roll in contact with a first surface of the protective film and a second separation roll in contact with a second surface of the separator,
the first direction and the second direction form a fifth angle, and
the first direction and the third direction form a sixth angle having a direction opposite to that of the fifth angle.

12. The separator running apparatus of claim 1, wherein the protective film passed through the separation roll passes through a first angle adjustment roll, and
the first angle adjustment roll is arranged to be adjustable in position thereof.

13. The separator running apparatus of claim 12, wherein the protective film runs in a straight line between the separation roll and the first angle adjustment roll.

14. The separator running apparatus of claim 1, wherein the separator passed through the separation roll passes through a second angle adjustment roll, and
the second angle adjustment roll is arranged to be adjustable in position thereof.

15. The separator running apparatus of claim 14, wherein the separator runs in a straight line between the separation roll and the second angle adjustment roll.

16. A separator running method comprising:
a separation step of separating a continuously supplied sheet of a separator with a protective film attached thereto into the separator and the protective film,
wherein a separation angle between a second direction and a third direction is equal to or greater than 45 degrees,
where a first direction is a running direction of the sheet immediately before the separation step,
the second direction is a running direction of the protective film immediately after the separation step, and
the third direction is a running direction of the separator immediately after the separation step.

17. The separator running method of claim 16, wherein the separation angle is equal to or greater than 90 degrees.

18. The separator running method of claim 16, wherein the separation angle is equal to or smaller than a first angle between the first direction and the second direction.

19. The separator running method of claim 18, wherein the separation angle is equal to the first angle.

20. The separator running method of claim 18, wherein a direction of a second angle between the first direction and the third direction is same as that of the first angle, and
the separation angle is smaller than the first angle.

21. The separator running method of claim 16, wherein the separation angle is equal to or smaller than a third angle between the first direction and the third direction.

22. The separator running method of claim 21, wherein the separation angle is equal to the third angle.

23. The separator running method of claim 21, wherein a direction of a fourth angle between the first direction and the second direction is same as that of the third angle, and
the separation angle is smaller than the third angle.

24. The separator running method of claim 16, wherein the first direction and the second direction form a fifth angle, and
the first direction and the third direction form a sixth angle having a direction opposite to that of the fifth angle.
